# EUROPÄISCHE PATENTSCHRIFT

(11) **EP 2 332 631 B1**
(45) Veröffentlichungstag und Bekanntmachung des Hinweises auf die Patenterteilung: **14.11.2012**
(21) Anmeldenummer: 09177948.8
(22) Anmeldetag: 03.12.2009
(51) Int. Cl.: B01D 53/06, B01D 53/26

(54) **Adsorptionstrocknungsvorrichtung sowie Adsorptionstrocknungsverfahren**
Absorption drying device and absorption drying method
Dispositif de séchage par adsorption ainsi que procédé de séchage par adsorption

(43) Veröffentlichungstag der Anmeldung: 15.06.2011
(73) Patentinhaber: Kaeser Kompressoren GmbH, 96450 Coburg (DE)
(72) Erfinder: Fredenhagen, Andreas, Dr., 96450 Coburg (DE); Martin, René, 96450 Coburg (DE); Feisthauer, Michael, 06484 Meerder (DE); Rohdenhurg, Michael, Dr., 96484 Lautertal (DE)
(74) Vertreter: Zech, Stefan Markus

(56) Entgegenhaltungen:
- CH-A5- 691 349
- DE-A1- 3 902 977
- US-A- 2 675 089
- US-A- 4 062 129
- US-A- 4 235 608
- US-A- 4 701 189

## Beschreibung

Die Erfindung betrifft eine Adsorptionstrocknungsvorrichtung gemäß Anspruch 1 sowie ein Adsorptionstrocknungsverfahren gemäß Anspruch 15.

Für die Trocknung von Gasen werden vielfach Adsorptionsverfahren eingesetzt. Beispielhaft sei hier die Entfeuchtung von Druckluft, Stickstoff, Erdgas oder Gasen aus chemischen Produktionsprozessen erwähnt. Neben Verfahren, in dem zwei oder mehr separate Adsorptionsbehälter eingesetzt werden, die im gegenseitigen Wechsel einen Trocknungszyklus und einen Regenerationszyklus durchlaufen, gibt es Verfahren, die mit einem rotierenden Adsorptionsmittel arbeiten, bei dem das Adsorptionsmittel innerhalb einer Trommel fixiert ist und kontinuierlich durch einen Sektor, in dem es regeneriert wird (Regenerationssektor), und einem Sektor, in dem es zur Trocknung eingesetzt wird (Trocknungssektor) bewegt wird. Auf den Stirnseiten des Adsorptionsmittels befinden sich Kammern, durch die die verschiedenen Gasströme durch die Sektoren geleitet werden.

Die Sektoren werden jeweils durch die Teile einer Trommel gebildet, die sich in den durch die Kammern definierten Bereichen befinden, so dass jeder Teil der Trommel zyklisch durch die Sektoren bewegt wird.

Diese Verfahren werden häufig in der Klimatechnik eingesetzt, sind aber auch in der Drucklufttechnik bekannt. In diesem Zusammenhang wird nur beispielhaft auf die DE 1 751 041 und die DE 2 238 551 verwiesen. Das Verfahren gemäß DE 1 751 041, das auch als Teilstromverfahren bezeichnet wird, soll im Folgenden anhand von Fig. 1 erläutert werden.

Das Trockenmittel ist hierbei als drehbare, trommelartige Adsorptionskammer 11 mit einer Vielzahl von parallelen Adsorptionskanälen 101 ausgeführt, wobei die Adsorptionskammer 11 durch einen Kammerantrieb 12 durch einen Trocknungssektor 102 und einen Regenerationssektor 103 insbesondere kontinuierlich bewegt werden kann.

Ein Teil des in einem Kompressorblock 2 (einer höchsten Stufe) eines Eingangskompressors 1 verdichteten Gases wird unmittelbar in eine Trocknungseinheit 16 zu einer Regenerationseintrittskammer 6 geführt, strömt dann durch den Regenerationssektor 103 der Adsorptionskammer 11 zu einer Regenerationsaustrittskammer 7 und nimmt dabei Feuchtigkeit auf. Der aus dem Regenerationssektor 103 austretende Gasstrom wird stromabwärts in einem Regenerationskühler 13 gekühlt, wobei kondensierte Flüssigkeit in einem Abscheider 14 abgeschieden wird. Ein Hauptstrom wird in einem Nachkühler 3 des Eingangskompressors 1 gekühlt, wobei Feuchtigkeit in einem Kondensatabscheider 4 abgeschieden wird.

Der Hauptstrom und der aus dem Regenerationssektor 103 austretende Strom werden vereinigt und in eine Trocknungseintrittskammer 8 geführt. Die Wiedervereinigung des aus dem Regenerationssektor 103 austretenden Stroms mit dem Hauptstrom wird nach dem Stand der Technik mit einem Ejektor 15 realisiert, durch den der Regenerationsstrom durch den Hauptstrom angesaugt und verdichtet wird. Da der Hauptstrom und somit auch der wiedervereinigte Strom durch den Nachkühler 3 und insbesondere durch den Ejektor 15 einen erheblichen Druckverlust erfährt, wird der Regenerationsstrom vor dem Eintritt in die Adsorptionskammer 11 bzw. die Regenerationskammer 6 mit einem Drosselventil 10 soweit gedrosselt, dass ein Differenzdruck zwischen Regenerationseintrittskammer 6 und Trocknungsaustrittskammer 9 einen zumindest geringen positiven Wert annimmt.

Das Verfahren gemäß dem Stand der Technik wird als nachteilig empfunden. Aufgrund der Verdichtung im Eingangskompressor wird das Gas erwärmt. Es steht jedoch ein nur geringer Teil der Wärme für die Regeneration zur Verfügung, da nur der erwähnte Teilstrom durch den Regenerationssektor geleitet wird. Im Allgemeinen ist die Regenerationskapazität innerhalb des Trocknungssektors oftmals nicht ausreichend, insbesondere wenn durch niedrige Drücke oder hohe Temperaturen von Kühlmedien der eingesetzten Wärmetauscher (Nachkühler 3 und Regenerationskühler 13) in der Adsorptionskammer 11 größere Feuchtigkeitsmengen adsorbiert werden müssen. Die Adsorptionskammer 11 ist dann überlastet und es kommt zu hohen Feuchtigkeitskonzentrationen an einem Austritt der Adsorptionskammer 11. Insgesamt bietet das Verfahren gemäß dem Stand der Technik eine vergleichsweise geringe Betriebssicherheit gegenüber ungünstigen Bedingungen.

Weiterhin ist der Ejektor 15 vergleichsweise wenig energieeffizient. Insbesondere dann, wenn ein hoher Regenerationsstrom erreicht werden soll, ist ein vergleichsweise hoher Druckverlust des Hauptstroms erforderlich, um den Regenerationsstrom anzusaugen. Der Eingangskompressor 1 muss dann eine entsprechend erhöhte Leistung erbringen, um den erforderlichen Austrittsdruck sicherzustellen.

Gemäß dem Stand der Technik ist der Ejektor 15 für einen Betriebspunkt ausgelegt und wird nicht weiter geregelt. Bei abweichenden Betriebsdrücken und Volumenströmen stellen sich abweichende, ungünstigere Regenerationsstromanteile ein.

Insbesondere wenn die relative Feuchtigkeit des zu trocknenden Gases 100 % beträgt, können nicht abgeschiedene Tropfen enthalten sein. Wenn solche Tropfen auf ein Adsorptionsmaterial in der Adsorptionskammer 11 treffen, kommt es zu plötzlichen Hitzeentwicklungen und Materialschädigungen. Dadurch ist die Lebensdauer des Adsorptionsmaterials vergleichsweise begrenzt.

Aus der WO 2005/070518 A1, der DE 2 311 813 und der EP 1 283 741 B1 sind Verfahren bekannt, bei denen die Verdichtungswärme von entsprechenden Eingangskompressoren weitgehend vollständig genutzt wird, indem im Wesentlichen der gesamte Gasstrom aus dem Eingangskompressor 1 durch die jeweiligen Regenerationssektoren geführt wird. Problematisch hierbei ist, dass ein Leckagestrom als Teil des feuchten Regenerationsstroms aus der Regenerationseintrittskammer 6 und der Regenerationsaustrittskammer 7 in die Trocknungsaustrittskammer 9 bzw. Trocknungseintrittskammer 8, die bei den bekannten Verfahren niedrigere Drücke aufweisen, stattfindet. In der WO 2005/070518 A1 wird dies durch Dichtungen ("bulb seils") verhindert. Bei einer Rotation sind derartige Dichtungen einer hohen Beanspruchung ausgesetzt, was zu einem schnellen Verschleiß und von daher Kosten führt. Soweit die Dichtungen ("bulb seals") nicht vollständig abdichten, ist dennoch ein Leckagestrom zu erwarten. Die DE 2 311 813 und EP 1 283 741 B1 gehen einen anderen Weg und versuchen eine Kontamination des in den Trocknungssektor 102 ein- bzw. austretenden Stroms zu verhindern, indem Zwischenräume vorgesehen werden, in denen durch Absaugung ein noch niedrigerer Druck vorherrscht. Die Realisierung des letztgenannten Verfahrens ist vergleichsweise aufwändig, wobei die vergleichsweise hohen Differenzdrücke innerhalb der Adsorptionskammer äußerst hohe Anforderungen an die Abdichtung an einer Trommeloberfläche der Adsorptionskammer und an die mechanische Stabilität eines Materials, aus dem die Adsorptionskammer besteht, stellt. Insbesondere ein hoher Differenzdruck zwischen einem Regenerationsbereich und der Zwischenraumabsaugung birgt die Gefahr hoher Leckageströme, durch die die Effizienz des Verfahrens stark beeinträchtigt werden kann.

Weiterhin sei an dieser Stelle auf die WO 00/74819 A1 verwiesen, die ebenfalls ein Adsorptionstrocknungsverfahren vorschlägt, bei dem nur ein Teilstrom des zu trocknenden Gases einem Regenerationssektor zugeführt wird. Da der Regenerationsstrom nach Durchlaufen des Regenerationssektors sowie eines Kühlers gegenüber dem nichtabgeteilten Hauptstrom einen deutlichen Druckverlust erfährt, ist ein Gebläse 48 vorgesehen, um eine Wiedervereinigung von Regenerationsteilstrom und Hauptstrom zu ermöglichen. Das Gebläse 48 ist somit gemäß dem Stand der Technik nur deshalb erforderlich, weil ein Teilstrom von einem Hauptstrom abgezweigt wird und separat den Regenerationssektor durchläuft.

Zusammenfassend lässt sich der Stand der Technik in zwei Gruppen von Adsorptionstrocknungsanlagen bzw. -verfahren einteilen. Bei einer ersten Gruppe wird nur ein Teilstrom zur Regeneration verwendet, was die Effizienz aus den oben geschilderten Gründen verringert. Bei einer zweiten Gruppe wird der gesamte Strom zur Regeneration verwendet, was jedoch entweder zu einer Leckage und damit einem geringeren zu erreichenden Trocknungsgrad führt oder mit einem vergleichsweise hohen Konstruktionsaufwand verbunden ist.

Es ist daher Aufgabe der Erfindung, eine Adsorptionstrocknungsvorrichtung sowie ein Adsorptionstrocknungsverfahren vorzuschlagen, das möglichst effizient arbeitet, wobei gleichzeitig der erzielbare Trocknungsgrad hoch sowie der konstruktive Aufwand niedrig sein soll. Insbesondere sollen die Vorteile eine rotierenden Adsorptionskammer genutzt und zugleich eine hohe Regenerationskapazität und damit Betriebssicherheit erreicht werden, ohne die Nachteile, die hohe Differenzdrücke innerhalb der Adsorptionstrocknungsvorrichtung verursachen.

Die Aufgabe wird gelöst durch eine Adsorptionstrocknungsvorrichtung nach den Merkmalen des Anspruches 1 sowie durch ein Adsorptionstrocknungsverfahren nach Anspruch 15. Vorteilhafte Weiterbildungen sind in den Unteransprüchen angegeben.

Die Aufgabe wird insbesondere gelöst durch eine Adsorptionstrocknungsvorrichtung zur Trocknung eines insbesondere verdichteten Gases, umfassend eine Adsorptionskammer mit einer Vielzahl von Adsorptionskanälen, die ein Adsorptionsmaterial enthalten, wobei an einem ersten Ende der Adsorptionskammer eine erste Zuleitung sowie eine erste Ableitung angeordnet ist und an einem zweiten Ende der Adsorptionskammer eine zweite Zuleitung sowie eine zweite Ableitung angeordnet ist, wobei die Adsorptionskammer gegenüber den Zu- und Ableitungen rotierbar ist, so dass die Adsorptionskanäle in zeitlichem Wechsel mit der ersten Zuleitung und der zweiten Ableitung oder der ersten Ableitung und der zweiten Zuleitung fluidtechnisch verbindbar sind, so dass ein Trocknungssektor sowie ein Regenerationssektor definiert ist, wobei im Trocknungssektor das Gas getrocknet wird, und im Regenerationssektor das Adsorptionsmaterial regeneriert wird, wobei die erste Zuleitung derart ausgebildet ist, dass der zu trocknende Gasstrom als Vollstrom dem Regenerationssektor zuführbar ist, wobei die zweite Ableitung mit der zweiten Zuleitung verbunden ist und somit eine Verbindungsleitung ausbildet, in der ein Kondensator vorgesehen ist, und wobei in der Verbindungsleitung eine gegenüber dem Kondensator stromabwärts angeordnete Druckerhöhungseinrichtung vorgesehen ist, um den Druck des von der zweiten Ableitung zu der zweiten Zuleitung strömenden Gases zu erhöhen, wobei gegebenenfalls am ersten und/oder zweiten Ende der Adsorptionskammer ein Kühlstrom abzweigbar ist, um die Adsorptionskammer innerhalb eines Kühlsektors zu kühlen, und wobei Regenerationssektor und Trocknungssektor zur seriellen Durchströmung hintereinander angeschlossen sind, derart dass der dem Trocknungssektor zugeführte Gasstrom im Wesentlichen vollständig dem aus dem Regenerationssektor, ggf. einschließlich des Gasstroms aus dem Kühlsektor, abgeführten Gasstrom entspricht. Es kann ein Eingangskompressor vorgesehen sein, um das zu trocknende Gas der ersten Zuleitung im verdichteten Zustand zuzuführen.

Unter dem Begriff "Leitung", insbesondere Zuleitung, Ableitung, Verbindungsleitung, soll im Folgenden funktionell eine entsprechende Zuführung, Abführung oder Verbindung verstanden werden. Der Begriff "Leitung" kann jedoch alternativ auch einschränkend im Sinne einer körperlichen Abgrenzung verstanden werden. Unter "im zeitlichen Wechsel" soll allgemein verstanden werden, dass die Adsorptionskanäle einerseits mit der ersten Zuleitung und der zweiten Ableitung und andererseits mit der ersten Ableitung und der zweiten Zuleitung verbindbar sind. Im Allgemeinen soll darunter jedoch nicht verstanden werden, dass die Adsorptionskanäle nicht mit noch anderen Leitungen oder Gasführungen verbindbar sind.

Unter einem Kondensator wird hier die funktionelle Einheit (ggf. auch die strukturelle Einheit) aus einem Kühler und einem Kondensatabscheider verstanden, wobei im Kühler zumindest ein Teil einer kondensierbaren Komponente auskondensiert und danach im Kondensatabscheider abgeschieden wird.

Unter Vollstrom soll insbesondere ein Anteil des Gasstromes von mindestens 95 %, vorzugsweise mindestens 99 %, weiter vorzugsweise (im wesentlichen) 100 % verstanden werden.

Ein Kerngedanke besteht darin, dass die erste Zuleitung derart ausgebildet ist, dass der zu trocknende Gasstrom als Vollstrom dem Regenerationssektor zuführbar ist, wobei die zweite Ableitung mit der zweiten Zuleitung verbunden ist und somit eine Verbindungsleitung ausbildet, in der ein Kondensator vorgesehen ist, wobei in der Verbindungsleitung eine Druckerhöhungseinrichtung vorgesehen ist, um den Druck des von der zweiten Ableitung zu der zweiten Zuleitung strömenden Gases zu erhöhen, wobei ggf. am ersten oder zweiten Ende der Adsorptionskammer ein Kühlstrom abzweigbar ist, um die Adsorptionskammer innerhalb eines Kühlsektors zu kühlen, und wobei Regenerationssektor und Trocknungssektor zur seriellen Druckströmung hintereinander angeschlossen sind, derart dass der dem Trocknungssektor zugeführte Gasstrom im wesentlichen vollständig dem aus dem Regenerationssektor, ggf. einschließlich des Gasstroms aus dem Kühlsektor, abgeführten Gasstrom entspricht. Es erfolgt also prinzipiell keine Aufspaltung des Gasstroms in einen Hauptstrom und einen Regenerationsstrom mit den damit verbundenen Nachteilen. Weiterhin ist zum anderen die Druckerhöhungseinrichtung vorgesehen, was die Ausbildung eines unerwünschten Leckagestroms mit einfachen Mitteln verhindert. Insbesondere kann die bei der Verdichtung im Eingangskompressor anfallende Wärme für die Regeneration des Adsorptionsmittels in der Adsorptionskammer effizient genutzt werden. Besonders effizient ist das Verfahren, wenn der Eingangskompressor ein Schraubenverdichter und/oder Turboverdichter ist.

Es wird auf Dokument US 4 062 129 A verwiesen welches eine Adsorptionstrocknungsvorrichtung und ein Verfahren zur Trocknung eines Gases offenbart, wobei der gesamte Luftstrom durch die Bereiche für Regeneration, gefolgt von Kühlung mit Kondensation und Trocknung geleitet wird.

Um den Luftübertritt zwischen Regenerations- und Trocknungssektor zu unterbinden bietet Dokument US 4 062 129 A eine Lösung (Zonen mit erhöhtem Drucks zwischen Trocknungs- und Regenerationssektor), wobei der Druck dieser Zwischenzonen über dem Druck des Regenerationssektors liegt.

In der vorgeschlagenen Adsorptionstrocknungsvorrichtung wird durch die Druckerhöhungseinrichtung ein positiver Differenzdruck zwischen Trocknungs- und Regenerationssektor erzeugt, um zu vermeiden, dass ein Luftübertritt aus dem Regenerationsabschnitt in den Trocknungsabschnitt erfolgt. Die Druckerhöhungseinrichtung hat daher den Zweck, den Druckverlust des Gases von der Regenerationseintrittskammer bis zur Trocknungsaustrittskammer über den Regenerationssektor, den Kondensator, den Trocknungssektor sowie den entsprechenden Verbindungsleitungen zur Kammer zu kompensieren und zusätzlich den oben erwähnten positiven Differenzdruck aufzubauen.

Als Adsorptionsmaterial kommt beispielsweise Silicagel oder alternativ ein Molekularsieb in Frage. Die Umlauffrequenz der Adsorptionskammer kann beispielsweise 2 bis 20 Umdrehungen pro Stunde betragen.

Unter der zweiten Zuleitung ist insbesondere der jeweils geöffnete Eintrittsquerschnitt in die Adsorptionskammer gemeint. Der Begriff Verbindungsleitung ist im Allgemeinen als funktionelle Verbindung zu verstehen, kann jedoch auch einschränkend verstanden werden.

Dadurch dass die Adsorptionskammer rotierbar ist, hat die erfindungsgemäße Vorrichtung gegenüber einer Adsorptionsvorrichtung mit zwei oder mehr separaten Adsorptionsbehältern, bei denen möglicherweise ebenfalls Verdichtungswärme zur Regeneration benutzt wird, den Vorteil, dass nur ein Adsorptionsbehälter erforderlich ist und auch keine aufwändige Verrohrung mit einer Vielzahl von Ventilen und einer entsprechenden Steuerung benötigt wird.

Ein weiterer Vorteil der Erfindung besteht darin, dass durch die Druckerhöhungseinrichtung die Gasstromtemperatur angehoben wird. Dadurch sinkt die relative Feuchte des Gases, so dass ggf. noch vorhandene Wassertropfen verdunsten. Eine Schädigung des Adsorptionsmaterials kann so vermieden bzw. reduziert werden, so dass vergleichsweise lange Standzeiten, insbesondere gegenüber dem Teilstromverfahren realisiert werden können.

Der Begriff "Trocknung" kann einschränkend verstanden werden dahingehend, dass aus einem Luftstrom bzw. Gasstrom Wasser entfernt werden soll. Im Allgemeinen soll unter "Trocknung" jedoch das Entfernen einer adsorbierbaren und/oder kondensierbaren Komponente aus einem Luftstrom bzw. Gasstrom verstanden werden.

Es kann eine Adsorptionskammer bzw. "Trockentrommel" verwendet werden, wie sie allgemein in der Klimatechnik oder in der Drucklufttrocknung im Teilstromverfahren üblich und bekannt sind (siehe beispielsweise US 4 391 667).

Vorzugsweise besteht die Trockentrommel beispielsweise aus einem dünnen Trägermaterial aus glatten und gewellten Folien, das eine Struktur aus insbesondere parallelen Kanälen ausbildet und auf dem ein Adsorptionsmittel, beispielsweise Silicagel, fixiert wird, welches beispielsweise chemisch gebunden ist. Je nach Größe der Trockentrommel können um eine Rotationsachse Bleche (Speichen) fixiert werden, die sich entlang der Rotationsachse (Trommelachse) von innen radial nach außen erstrecken. Dadurch wird eine vergleichsweise hohe Stabilität der Trockentrommel erreicht. In den Segmenten, die durch die Ausbildung der Speichen entstehen, können Blöcke mit den oben beschriebenen Kanalstrukturen fixiert sein. Es können auch zwei oder mehr Blöcke bzw. Blockreihen hintereinander angeordnet werden, so dass längere Trockentrommeln bereitgestellt werden können bzw. die Länge der Trockentrommel variiert werden kann, was die Effektivität der Trocknung steigert.

Vorzugsweise sind die Kanäle kleiner ausgebildet als Ränder der entsprechenden Bereiche, so dass ein Adsorptionskanal nicht mit zwei durch die Ränder voneinander abgegrenzten Bereiche gleichzeitig in Verbindung sein kann.

Die Adsorptionskammer kann innerhalb eines Adsorptionsbehälters rotierbar gelagert sein, der vorzugsweise auch die Zu- und Ableitungen zumindest teilweise umfasst. Derartige Zu- und Ableitungen sind einfach herzustellen und robust.

Vorzugsweise ist die Druckerhöhungsvorrichtung zumindest teilweise innerhalb des Adsorptionsbehälters, insbesondere zumindest teilweise innerhalb eines Auflagers für die rotierbare Adsorptionskammer vorgesehen. Dadurch kann eine weitere Verrohrung eingespart werden, was den Aufwand in konstruktiver Hinsicht reduziert. Insbesondere kann die Druckerhöhungsvorrichtung an einem Boden des Adsorptionsbehälters angeordnet bzw. befestigt sein.

Die Druckerhöhungseinrichtung kann ein mechanischer Verdichter, insbesondere ein Kompressor und/oder ein Gebläse und/oder eine Pumpe und/oder ein Seitenkanalverdichter und/oder ein Turboverdichter, beispielsweise Radialverdichter sein. Seitenkanalverdichter werden im Allgemeinen für Prozesse mit atmosphärischem Ansaugdruck verwendet, um relativ geringe Druckerhöhungen zu erreichen. Im vorliegenden Fall hat sich jedoch überraschenderweise gezeigt, dass Seitenkanalverdichter auch vorteilhaft eingesetzt werden können, um in der Adsorptionstrocknungsvorrichtung die erforderlichen Druckerhöhungen bei hohen Ansaugdrücken zu realisieren. Bei Radialverdichtern ist das Verdichtergehäuse (beispielsweise ein Spiralgehäuse) im allgemeinen Fall ebenfalls nur für geringe Überdrücke ausgelegt. Wird das Verdichtergehäuse vorzugsweise druckfest gestaltet und insbesondere ein Austritt des Verdichtergehäuses mit einem Eintritt in die Trocknungseintrittskammer verbunden, so kann ein Radialverdichter, ohne die Adsorptionstrocknungsvorrichtung aufwändig anpassen zu müssen, in einfacher Weise integriert werden.

Die Verbindungsleitung kann derart beschaffen sein, dass im Betrieb der Adsorptionstrocknungsvorrichtung ein aus der zweiten Ableitung abströmendes Gasstrom im Wesentlichen gleich einem der zweiten Zuleitung zuströmenden Gasstrom ist. Dies soll insbesondere bedeuten, dass weder ein erheblicher Teil der aus der zweiten Ableitung abströmenden Gasstrom abgetrennt wird, noch eine Leitung vorgesehen ist, um der Verbindungsleitung einen weiteren Gasstrom zuzuführen. Die Verbindungsleitung weist in diesem Sinne somit keine Verzweigungen auf. Dies erleichtert die Kontrolle der Adsorptionsvorrichtung und den Aufbau derselben.

Vorzugsweise ist ein Eingangskompressor vorgesehen, um das zu trocknende Gas der ersten Zuleitung in verdichtetem Zustand zuzuführen. Beispielsweise kann der Eingangskompressor ein ein- oder mehrstufiger trockenverdichtender Schraubenverdichter und/oder ein Turboverdichter sein. Die bei der Verdichtung anfallende Wärme kann dann besonders einfach für die Regeneration des Adsorptionsmittels genutzt werden. Vorzugsweise umfasst der Eingangskompressor einen Kompressorkondensator insbesondere mit einem Nachkühler und einem Kondensatorabscheider, wobei weiter vorzugsweise der Kompressorkondensator, insbesondere der Nachkühler und/oder der Kondensatabscheider den in der Verbindungsleitung vorgesehenen Kondensator zumindest teilweise ausbildet/ausbilden. Dadurch kann ein Bauteil der Adsorptionsvorrichtung mindestens teilweise entfallen, was Kosten reduziert, insbesondere den Instandhaltungs- und Montageaufwand verringert.

In einer konkreten Ausführungsform ist eine an die Adsorptionskammer angrenzende, erste Querschnittsfläche Q₁ der ersten Zuleitung, die einen Regenerationssektor definiert, kleiner ist als eine an die Adsorptionskammer angrenzende, zweite Querschnittsfläche Q₂ der zweiten Zuleitung, die einen Trocknungssektor definiert, wobei ein Verhältnis von Q₂/Q₁ im Bereich von 0,3 - 3 liegt, vorzugsweise in etwa gleich groß ist.

In konkreten Ausführungsformen ist die Querschnittsfläche Q₁ kleiner als eine an die Adsorptionskammer angrenzende dritte Querschnittsfläche Q₃ der zweiten Ableitung, wobei vorzugsweise Q₁/Q₃ größer als 0,9, also im Bereich von 0,9 bis 1,0 ist. Alternativ oder zusätzlich kann die Querschnittsfläche Q₂ kleiner als eine an die Adsorptionskammer angrenzende vierte Querschnittsfläche Q₄ der ersten Ableitung sein. Im Ergebnis kann die Adsorptionskammer innerhalb eines Kühlsektors gekühlt werden. Dadurch wird in besonders einfacher Weise der Wirkungsgrad der Adsorptionsvorrichtung gesteigert.

Die Dimensionierung der Querschnittsflächen Q₁ und Q₃ erfolgt vorzugsweise derart, dass eine Druckdifferenz über dem Kühlsektor, bei welcher der erforderliche Kühlluftstrom durch den Kühlsektor strömt, um einen vergleichsweise geringen Betrag (beispielsweise 1 bis 4 Millibar) oberhalb der Druckdifferenz über dem Regenerationssektor liegt. Wählt man den Kühlsektor im Verhältnis zum Regenerationssektor zu groß, stellt sich beim für die Kühlung erforderlichen Kühlluftstrom in der Regenerationseintrittskammer ein höherer Druck als in der Trocknungsaustrittskammer 1, was das Trocknungsergebnis verschlechtern würde bzw. was dazu führen würde, dass eine unnötig hohe Fördermenge durch die Druckerhöhungsvorrichtung gefördert wird, damit sich aufgrund des dann erhöhten Kühlluftstroms, der über den Kühlsektor strömt, eine ausreichend große Druckdifferenz aufbaut. Das Verhältnis der Querschnittsflächen Q₁/Q₃ ist daher vorzugsweise > 0,90, insbesondere > 0,95.

In einer weiteren konkreten Ausführungsform ist ein Kühlstrom am ersten oder zweiten Ende der Adsorptionskammer abzweigbar, um die Adsorptionskammer innerhalb eines Kühlsektors zu kühlen. Dadurch kann die Kühlung unabhängig von dem Strom des zu trocknenden Gases gesteuert werden. Dies verbessert die Betriebssicherheit im Hinblick auf veränderliche Volumenströme.

Insbesondere wenn ein Radialverdichter vorgesehen ist, kann die Druckerhöhungsvorrichtung einen Ringdiffusor umfassen. Dann kann beispielsweise auf ein Spiralgehäuse verzichtet werden, wobei ausgenutzt werden kann, dass prozessbedingt die Druckluft über einen vergleichsweise großen Querschnitt in den Trocknungssektor einströmt und von daher die an einem Verdichterradumfang des Radialverdichter austretende Luft (Gas) nicht in einem Rohrquerschnitt zusammengeführt werden muss. Vorzugsweise wird der Ringdiffusor zumindest teilweise durch den Adsorptionsbehälter, insbesondere das Auflager gebildet. Dadurch kann Material für die Ausbildung des Ringdiffusors eingespart werden, was die Kosten senkt.

Vorzugsweise ist eine Antriebswelle zum Antrieb der Druckerhöhungseinrichtung zumindest teilweise in einem Leitungsabschnitt der Verbindungsleitung geführt. Im Allgemeinen gilt, dass, wenn eine Antriebswelle zum Antrieb der Druckerhöhungseinrichtung vorgesehen ist, durch den Ringdiffusor die radialen Kräfte auf die Welle minimiert werden, was sich positiv auf die Lagerung und Durchführung der Antriebswelle auswirkt. Eine Durchführung der Antriebswelle durch einen Leitungsabschnitt der Verbindungsleitung ist konstruktiv besonders einfach.

In einer konkreten Ausführungsform weist ein Leitungsabschnitt der Verbindungsleitung, insbesondere der oben erwähnte Leitungsabschnitt, mindestens eine Gaseintrittsöffnung auf, die in einer Verbindungsleitungswand ausgebildet ist. Die zu trocknende Luft kann dann besonders einfach zugeführt werden.

Vorzugsweise ist eine Antriebseinheit zum Antrieb der Druckerhöhungseinrichtung außerhalb eines Druckraums, insbesondere außerhalb eines Verdichtergehäuses und/oder außerhalb des Adsorptionsbehälters angeordnet. Dadurch wird erreicht, dass die entsprechende Antriebswelle aus dem Druckraum zu der außenliegenden Antriebseinheit geführt werden kann. Dies hat weiterhin zur Folge, dass durch die Druckerhöhungseinrichtung keine Schmiermittel in die Druckluft gelangen können, was insbesondere bei der Trocknung nach trockenlaufenden Kompressoren vorteilhaft ist. Ein trockenlaufender Kompressor kann eingesetzt werden, um zu vermeiden, dass Verunreinigungen, insbesondere Kohlenwasserstoffe in der Druckluft enthalten sind.

Vorzugsweise ist die Welle eines Verdichterrades einseitig, insbesondere außerhalb des Druckraumes, vorzugsweise außerhalb eines Verdichtergehäuses und/oder außerhalb des Adsorptionsbehälters, gelagert. Dies hat zur Folge, dass Lagerschmierstoffe nicht in direktem Kontakt mit dem zu trocknenden Gas kommen bzw. im Allgemeinen die Antriebswelle außerhalb des Druckraums gelagert ist.

In möglichen konkreten Ausführungsformen ist zur Abdichtung der Welle eine Dichtvorrichtung, vorzugsweise eine Drosselspaltdichtung und/oder eine Labyrinthdichtung und/oder eine insbesondere trockenlaufende Lippendichtung und/oder mindestens eine Dichtung, die aufweitbar ist, und/oder mindestens eine Dichtung, die im Stillstand der Welle abdichtet und/oder eine gas- oder flüssigkeitsgeschmierte Gleitringdichtung vorgesehen, wobei die Dichtvorrichtung weiter vorzugsweise von außerhalb des Druckraumes, insbesondere von außerhalb des Verdichtergehäuses und/oder Adsorptionsbehälters zugänglich ist. Insbesondere bei aufweitbaren Dichtungen können diese derart angepasst werden, dass sie nur im Stillstand die Welle berühren, was auch bei vergleichsweise langem Stillstand der Adsorptionstrocknungsvorrichtung Leckageverluste minimiert. Im Allgemeinen kann dadurch eine zusätzliche Abdichtung im Stillstand der Adsorptionstrocknungsvorrichtung erreicht werden.

Eine Zugänglichkeit der Dichtvorrichtung von außerhalb des Verdichtergehäuses bzw. des Adsorptionsbehälters soll insbesondere bedeuten, dass die Dichtung ohne Entnahme der Adsorptionskammer zugänglich ist bzw. ausgetauscht werden kann.

Es kann eine (zusätzliche) Dichtung vorgesehen sein, die im Stillstand der Welle berührend abdichtet. Dies minimiert Leckagenverluste bei einem Stillstand der Welle. Beispielsweise können eine oder mehrere aufweitbare Dichtungen (Beispiel: aufblasbare O-Ring-Dichtungen) und/oder Dichtungen, die im Stillstand auf einer Dichtfläche aufliegen und sich aufgrund einer Verformung durch die Fliehkraft beim Drehen der Welle von der Dichtfläche lösen (Beispiel: Lippendichtung), vorgesehen sein.

Die Dichtvorrichtung ist vorzugsweise derart in der Adsorptionstrocknungsvorrichtung installiert, dass ein Austausch der Dichtvorrichtung ohne Öffnen eines gesamten Adsorptionsbehälterquerschnitts (oder eines Teiles desselben), Demontage der Kammern (insbesondere Regenerationseintrittskammer, Regenerationskammer, Trocknungseintrittskammer und Trocknungsaustrittskammer), herausnehmen der Adsorptionskammer und/oder eines Trommellagers möglich ist.

Hierzu kann die Welle so geteilt sein, dass ein Lösen einer Wellenverbindung von außerhalb des Adsorptionsbehälters möglich ist. Alternativ oder zusätzlich kann die Verbindung von Verdichterrad und Welle so gestaltet sein, dass ein Lösen von außerhalb des Adsorptionsbehälters möglich ist. Alternativ oder zusätzlich kann ein Behälterboden so gestaltet sein, dass ein Herausziehen des Verdichterrades möglich ist. Eine weitere Alternative besteht in der Verwendung (in dem Einsatz) einer von außen zugänglichen Dichtung mit geteilten Dichtungsringen.

In einer möglichen Ausführungsform ist eine Antriebseinheit zum Antrieb der Druckerhöhungseinrichtung innerhalb des Druckraumes, insbesondere innerhalb des Verdichtergehäuses und/oder des Adsorptionsbehälters angeordnet. Dadurch kann ein Betrieb der Druckerhöhungseinrichtung ohne oder zumindest mit nur geringem Leckageverlust ermöglicht werden.

In einer möglichen Ausführungsform ist eine Magnetkupplung vorgesehen, um die Druckerhöhungseinrichtung anzutreiben. Auch hier wird insbesondere ein Betrieb der Druckerhöhungseinrichtung ohne oder nur mit geringem Leckageverlust ermöglicht. Weiterhin ist eine Durchführung einer rotierenden Welle in das Gehäuse der Druckerhöhungsvorrichtung bzw. den Adsorptionsbehälter nicht notwendig.

In weiteren Alternativen ist das Antriebsrad und/oder die Antriebswelle der Druckerhöhungsvorrichtung gasschmierbar und/oder trockenlaufend gelagert. Alternativ oder zusätzlich kann eine Magnetlagerung zur Lagerung vorgesehen sein und/oder eine Wälzlagerung, bei der beispielsweise durch eine Drosselleitung in einem Lagerbereich ein Unterdruck herstellbar ist. Im Ergebnis werden so Verunreinigungen des zu trocknenden Gases vermieden bzw. zumindest reduziert.

Vorzugsweise ist eine Steuereinrichtung zur Steuerung der Drehzahl der Druckerhöhungseinrichtung, beispielsweise über eine Frequenzumwandlung, vorgesehen. Die Frequenzumwandlung ist vorzugsweise über ein Signal aus dem Eingangskompressor, beispielsweise über die Drehzahl des Eingangskompressors und/oder über einen Druck im Eingangskompressor und/oder in der Adsorptionstrocknungseinrichtung ansteuerbar. Eine derartige Steuereinrichtung bzw. Messeinrichtungen erhöhen die Effektivität der Adsorptionstrocknungsvorrichtung.

Es kann vorzugsweise auf Parameter zurückgegriffen werden, die in der Kompressorsteuerung bereits vorliegen und/oder hinterlegt sind. Die Steuereinrichtung ist vorzugsweise ausgebildet, um mindestens ein Druckerhöhungseinrichtungsparameter, insbesondere die Drehzahl des Eingangskompressors und/oder den Druck im Eingangskompressor und/oder den Druck in der Adsorptionstrocknungsvorrichtung, auszuwerten und entsprechend die Drehzahl der Druckerhöhungseinrichtung zu steuern. Der Druckerhöhungseinrichtungsparameter kann alternativ oder ergänzend mithilfe einer dafür vorgesehene Messeinrichtung ermittelt werden.

Die oben genannten Aufgabe wird unabhängig gelöst durch eine Adsorptionstrocknungsanlage, ggf. mit einer Adsorptionstrocknungsvorrichtung der vorbeschriebenen Art, jedoch auch unabhängig von einer Adsorptionstrocknungsvorrichtung der vorbeschriebenen Art, wobei ein Eingangskompressor vorgesehen ist, um das zu trocknende Gas zu verdichten, wobei das zu trocknende, verdichtete Gas vom Eingangskompressor zu der ersten Zuleitung als Vollstrom zuführbar ist. Dabei umfasst der Eingangskompressor vorzugsweise einen Kompressorkondensator, insbesondere mit einem Nachkühler und einem Kondensatabscheider, wobei weiter vorzugsweise der Kompressorkondensator, insbesondere der Nachkühler und/oder der Kondensatabscheider den in einer Verbindungsleitung vorgesehenen Kondensator zumindest teilweise ausbildet. Die Adsorptionstrocknungsanlage weist im Wesentlichen dieselben Vorteile auf, wie die weiter oben beschriebene Adsorptionstrocknungsvorrichtung.

Die Steuereinrichtung für die Adsorptionstrocknungsvorrichtung kann in der Adsorptionstrocknungsvorrichtung selbst implementiert sein. Bevorzugterweise ist die Steuereinrichtung in der Eingangskompressorsteuerung implementiert, die bevorzugtermaßen selbst in oder am Eingangskompressor angeordnet ist. Selbstverständlich ist es jedoch auch möglich, dass die Steuereinrichtung der Adsorptionstrocknungsvorrichtung teilweise oder ganz extern vorgesehen wird, beispielsweise mit einer externen zentralen Steuereinrichtung zusammenwirkt.

Die oben genannte Aufgabe wird gelöst durch ein Adsorptionstrocknungsverfahren zur Trocknung eines insbesondere verdichteten Gases mit den Schritten:
a) Bereitstellen einer Adsorptionskammer mit einer Vielzahl von Adsorptionskanälen (101);
b) Durchleiten des zu trocknenden Gases im Vollstromprinzip, von einem ersten Ende zu einem zweiten Ende der Adsorptionskammer durch einen Regenerationssektor;
c) Erhöhen des Druckes des Gases nach dem Durchleiten durch den Regenerationssektor;
d) Durchleiten des Gases von dem zweiten Ende zu dem ersten Ende der Adsorptionskammer durch einen Trocknungssektor; und
e) Rotieren der Adsorptionskammer.

Im Allgemeinen finden die Schritte a) bis e) nicht in einer bestimmten zeitlichen Reihenfolge statt. Insbesondere der Schritt e) kann kontinuierlich durchgeführt werden. Die Reihenfolge der Schritte b) bis d) kann sich auf den das Verfahren durchlaufenden zu trocknenden Gasstrom beziehen. Das Adsorptionsverfahren weist im Wesentlichen dieselben Vorteile auf, wie das weiter oben beschriebene Adsorptionstrocknungsverfahren.

Die im Schritt d) dem Trocknungssektor zugeführte Gasmenge kann 105 % bis 115 %, etwa 110 % der im Schritt b) aus dem Regenerationssektor abgeführten Gasmenge entsprechen. Vorzugsweise wird zwischen Schritt b) und d) aus dem Gas, insbesondere durch Kühlung auskondensierte Flüssigkeit durch Kondensatabscheidung abgetrennt.

In einer möglichen Ausgestaltung des Verfahrens wird nach dem Schritt d) ein Anteil des Gases, vorzugsweise 5-10 %, weiter vorzugsweise 7-15 %, insbesondere etwa10 % von dem ersten zu dem zweiten Ende der Adsorptionskammer durch einen Kühlsektor geleitet.

Vorzugsweise entspricht der Gasstrom aus dem Regenerationssektor, ggf. einschließlich des Gasstroms aus dem Kühlsektor zu mindestens 90 %, 95 %, (im wesentlichen) vollständig dem Gasstrom, der dem Trocknungssektor zugeführt wird.

In einer konkreten Ausführungsform des Verfahrens wird eine Antriebseinheit zur Erhöhung des Druckes im Schritt c) mit konstanter Drehzahl betrieben. Das Einstellen der Drehzahl kann dann für einen maximal vorgesehenen Volumenstrom, der sich aus einem Volumenstrom einer verdichteten Druckluft und beispielsweise eines Kühlluftstroms ergeben kann, erfolgen. Ein derartiges Verfahren ist insbesondere hinsichtlich einer Steuerung besonders einfach.

Alternativ kann eine Antriebseinheit zur Erhöhung des Druckes in Schritt c) mit variabler Drehzahl betrieben werden. Entscheidend für die Drehzahl der Druckerhöhungseinrichtung ist der Ansaugvolumenstrom des Eingangskompressors bzw. genauer der Luftmassenstrom, der in die Adsorptionstrocknungseinrichtung eintritt, sowie die Ansaugdichte. Dabei kann die Drehzahl insbesondere durch Auswertung einer oder mehrerer der folgenden Parameter bestimmt werden kann:
- Ansaugvolumenstrom eines Eingangskompressors (Liefermenge);
- Drehzahl des Eingangskompressors;
- in die Druckerhöhungseinrichtung emittierter Luftstrom;
- Ansaugdichte der Druckerhöhungseinrichtung;
- Eintrittsdruck in einer Druckerhöhungseinrichtung;
- Eintrittstemperatur in der Druckerhöhungseinrichtung;
- Ansaugdruck bzw. Umgebungsdruck des Eingangskompressors;
- Ansaugtemperatur des Eingangskompressors;
- Differenzdruck zwischen einem ersten Ende des Trocknungssektors und einem zweiten Ende des Regenerationssektors.

Im Ergebnis kann das Verfahren besonders effizient durchgeführt werden. Im Allgemeinen haben die Drehzahl des Eingangskompressors und der Eintrittsdruck in die Druckerhöhungseinrichtung den stärksten Einfluss auf einen Ansaugvolumenstrom der Druckerhöhungsvorrichtung. An Stelle der aufgeführten Größen können alternativ auch andere Werte gemessen werden, die eng mit den aufgeführten Werten korreliert sind, wie beispielsweise der Austrittsdruck der Druckerhöhungseinrichtung an Stelle des Eintrittsdrucks. Wenn ein Differenzdruck zwischen Trocknungsaustrittskammer und Regenerationseintrittskammer auf einen geringen, jedoch positiven Wert (beispielsweise 1 bis 4 Millibar) gehalten wird, hat es zum einen zur Folge, dass die Druckanhebung durch die Druckerhöhungseinrichtung ausreichend ist, so dass keine Leckage von feuchter zu trockener Luft erfolgen kann und zum anderen, dass eine Mindestdruckdifferenz über einen gegebenenfalls vorgesehenen Kühlluftbereich vorliegt und so eine Adsorptionsmittelkühlung erfolgt. Es ist von daher möglich, alleine diesen Differenzdruck als Regelgröße zu verwenden und durch Einstellung einer Drehzahl der Druckerhöhungseinrichtung auf einen konstanten Wert zu halten.

Eine Änderung eines Betriebsvolumenstroms bringt, sofern keine sehr niedrige Umgebungsfeuchte vorliegt, in der Regel auch eine Änderung der eingetragenen Feuchtigkeitsmenge mit sich. Dadurch ändert sich auch eine optimale Drehzahl der Adsorptionskammer, die entsprechend angepasst werden kann. Für die optimale Drehzahl der Adsorptionskammer ist zum einen der Betriebsvolumenstrom wichtig, der ähnlich wie bei der Ermittlung der Drehzahl der Druckerhöhungseinrichtung bestimmt wird, und zum anderen die Temperaturen am ersten oder zweiten Ende des Regenerationssektors. Parameter, die mit den oben genannten korrelieren, können berücksichtigt werden.

Vorzugsweise wird die Rotation im Schritt c) erst dann gestartet, wenn ein vorbestimmter Temperaturgrenzwert des Gases und/oder eines Bestandteils einer verwendeten Adsorptionstrocknungsvorrichtung überschritten wird. Wenn beispielsweise der Eingangskompressor keine Druckluft in die Adsorptionskammer fördert, wird diese angehalten und erst bei Wiederaufnahme der Förderung wieder gestartet. Beim Anfahren und nach längerem Stillstand der Adsorptionskammer bzw. der Adsorptionstrocknungsvorrichtung kann das Adsorptionsmittel, das sich zu diesem Zeitpunkt im Regenerationssektor befindet, kalt sein. Weiterhin liefert auch der Eingangskompressor zunächst ein Gas mit einer geringeren Temperatur. Aus diesem Grund ist es vorteilhaft, wenn die Rotation der Adsorptionskammer in diesem Fall erst dann gestartet wird, wenn eine ausreichende Erwärmung sichergestellt ist. Dies kann über entsprechende Temperatursensoren überwacht werden.

Eine Drehachse der Adsorptionskammer kann bevorzugt vertikal ausgerichtet sein. Der Eintritt des zu trocknenden Gases in den Regenerationssektor kann von oben erfolgen. Der Eintritt des zu trocknenden Gases in den Trocknungssektor kann von unten erfolgen. Im Allgemeinen können die Verhältnisse jedoch jeweils genau andersherum sein. Eine horizontale oder sonstige Ausrichtung der Drehachse der Adsorptionskammer ist denkbar. Ist ein Eintritt des zu trocknenden Gases in den Regenerationssektor von unten vorgesehen, so werden bevorzugt Maßnahmen zum Abführen des bei Abkühlung im Stillstand anfallenden Kondensates in einem dann oberen Bereich vorgesehen.

Weiteren Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der Abbildungen näher erläutert werden.

Hierbei zeigen:
- Fig. 1: eine Adsorptionsvorrichtung nach dem Stand der Technik in schematischer Darstellung;
- Fig. 2: eine erfindungsgemäße Adsorptionsvorrichtung in schematischer Darstellung;
- Fig. 3: eine schematische Darstellung eines Adsorptionsbehälters;
- Fig. 4: eine Adsorptionsvorrichtung in einer bevorzugten Ausführungsform in Schrägansicht; und
- Fig. 5: eine Adsorptionsvorrichtung in einer weiteren bevorzugten Ausführungsform in Schrägansicht.

In der nachfolgenden Beschreibung werden für gleiche und gleich wirkende Teile dieselben Bezugsziffern verwendet.

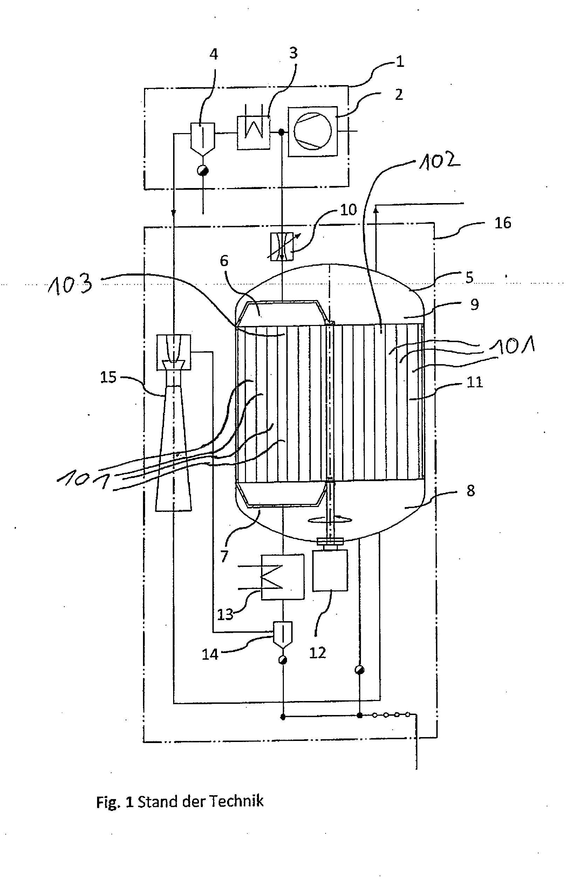

Die Adsorptionstrocknungsvorrichtung gemäß Fig. 1 (Stand der Technik) wurde bereits weiter oben beschrieben.

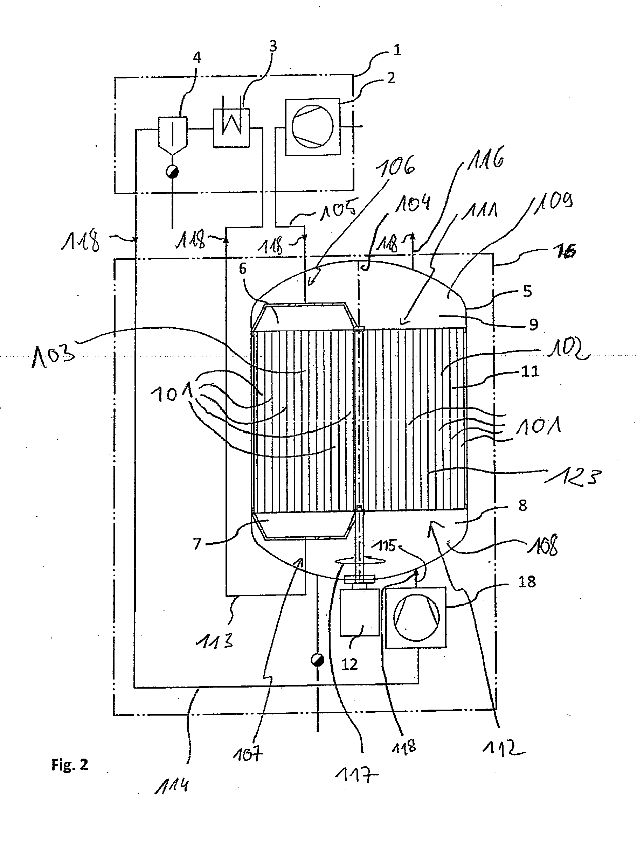

Fig. 2 zeigt eine erfindungsgemäße Adsorptionstrocknungsvorrichtung in schematischer Ansicht. Ein Adsorptionsmaterial 123 befindet sich in einer Adsorptionskammer 11, die innerhalb eines Adsorptionsbehälters 5 um eine Rotationsachse 104 rotierbar gelagert ist. Die Adsorptionskammer 11 weist eine Vielzahl von insbesondere parallelen Adsorptionskanälen 101 auf, durch die das zu trocknende Gas geleitet werden kann.

Über eine Leitung 105 kann das in einem Kompressorblock 2 eines Eingangskompressors 1 verdichtete, zu trocknende Gas einer Regenerationseintrittskammer 6 zugeführt werden, die eine erste Zuleitung 106 zumindest teilweise ausbildet. Regenerationseintrittskammer 6 bzw. erste Zuleitung 106 sind an einem ersten Ende 111 der Adsorptionskammer 11 angeordnet. Über die Leitung 105 wird hierbei der gesamte aus dem Kompressorblock 2 austretende Gasstrom zu der Regenerationseintrittskammer 6 geleitet.

Im Betrieb strömt der Gasstrom von der Regenerationseintrittskammer 6 durch die Vielzahl von Adsorptionskanälen 101 zu einer Regenerationsaustrittskammer 7 und nimmt dabei innerhalb eines Regenerationssektors 103 Feuchtigkeit von der Adsorptionskammer 11 auf. Die Regenerationsaustrittskammer 7 bildet eine zweite Ableitung 107 zumindest teilweise aus. Regenerationsaustrittskammer 7 bzw. zweite Ableitung 107 sind an einem zweiten Ende 112 der Adsorptionskammer 11 angeordnet.

Über eine Leitung 113 kann der aus dem Regenerationssektor 103 austretende Gasstrom einem Nachkühler 3 sowie einem Kondensatabscheider 4 des Eingangskompressors 1 zugeführt werden. Im Kondensatabscheider 4 wird dem Gasstrom Feuchtigkeit entzogen.

Über eine Leitung 114 wird der aus dem Kondensatabscheider 4 austretende Gasstrom einer Druckerhöhungseinrichtung 18, konkret einem Gebläse zugeführt. In der Druckerhöhungseinrichtung 18 wird der Druck des zu trocknenden Gasstromes angehoben.

Ein aus der Druckerhöhungseinrichtung 18 austretender Gasstrom mit erhöhtem Druck wird über eine Leitung 115 einer Trocknungseintrittskammer 8 zugeführt, die eine zweite Zuleitung 108 zumindest teilweise ausbildet. Von der Trocknungseintrittskammer 8 bzw. der zweiten Zuleitung 108 wird der Gasstrom durch eine Vielzahl von Adsorptionskanälen 101 geleitet, die sich zu einem gegebenen Zeitpunkt innerhalb eines Trocknungssektors 102 befinden. In den sich zum gegebenen Zeitpunkt im Trocknungssektor 102 befindenden Adsorptionskanälen 101 wird Feuchtigkeit adsorbiert und somit der Gasstrom weiter getrocknet.

Über einer Trocknungsaustrittskammer 9, die am ersten Ende 111 der Adsorptionskammer 11 angeordnet ist und zumindest teilweise eine erste Ableitung 109 ausbildet, kann der getrocknete Gasstrom über eine Ausgangsleitung 116 seinem Bestimmungsort zugeführt werden.

Die Adsorptionskammer 11 kann durch einen Kammerantrieb 12 rotiert werden. Die Adsorptionskammer 11 rotiert gemäß Fig. 2 von dem ersten Ende 111 aus gesehen gegen den Uhrzeigersinn (vgl. Pfeil 117). Die Strömungsrichtung des Gases wird durch Pfeile 118 dargestellt.

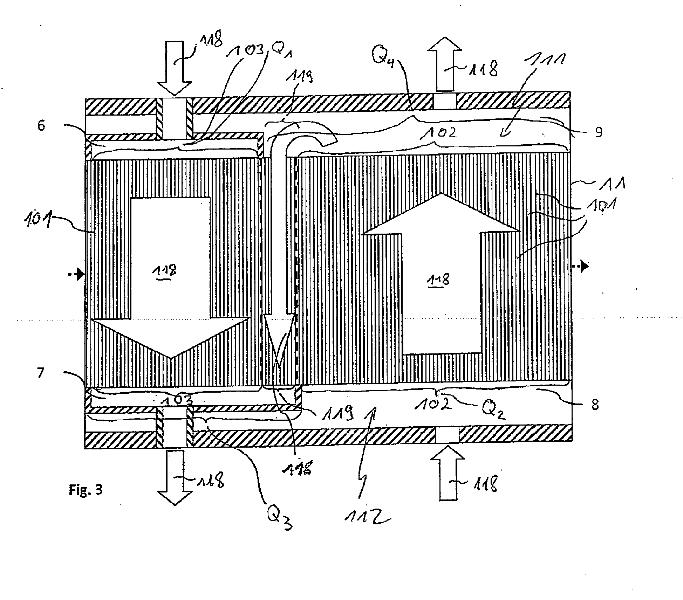

Fig. 3 zeigt eine schematische Darstellung des Adsorptionsbehälters 5, bei dem ein Kühlsektor 119 neben dem Trocknungssektor 102 und dem Regenerationssektor 103 ausgebildet ist. Die Richtung des Gasstroms ist schematisch über Pfeile 118 dargestellt. Die schematische Darstellung gemäß Fig. 3 entspricht einer Abwicklung der trommelartigen Adsorptionskammer 11 gemäß Fig. 2. Die Rotation der Adsorptionskammer 11 entspricht in Fig. 3 einer Bewegung von links nach rechts. Der erwärmte Gasstrom strömt von der Regenerationseintrittskammer 6 durch den Regenerationssektor 103 zur Regenerationsaustrittskammer 7. Ein Querschnitt Q₃ der Regenerationsaustrittskammer 7 ist größer als ein Querschnitt Q₁ der Regenerationseintrittskammer 6. Der Kühlsektor 119 wird an dem ersten Ende 111 der Adsorptionskammer 11 durch die Trocknungsaustrittskammer 9 und an dem zweiten Ende 112 durch die Regenerationsaustrittskammer 7 begrenzt. Eine Querschnittsfläche des Kühlsektors 119 bestimmt sich hierbei im Wesentlichen durch die Differenz Q₃ minus Q₁ bzw. Q₄ minus Q₂. Im Ergebnis strömt ein Teil der im Trocknungssektor 102 getrockneten Luft von der Trocknungsaustrittskammer 9 zur Regenerationsaustrittskammer 7 und kühlt das erwärmte Adsorptionsmaterial ab, bevor dieses in den Trocknungssektor 102 bewegt wird.

Der Kühlsektor 119 gemäß Fig. 3 kann neben der Kühlungsfunktion auch die Funktion haben, eine Differenz zwischen Betriebsvolumenströmen des Eingangskompressors 1 und der Druckerhöhungseinrichtung 18 auszugleichen. Wenn sich beispielsweise ein Volumenstrom, der vom Eingangskompressor 1 in die Trocknungseinheit 16 gefördert wird, verringert, während eine Leistung der Druckerhöhungseinrichtung 18 konstant bleibt, so kann dies dadurch ausgeglichen werden, dass entsprechend mehr Druckluft durch den Kühlsektor 119 strömt. Um die Drehzahl der Druckerhöhungseinrichtung 18 so einzustellen, dass eine Trocknung sichergestellt werden kann, ist es nicht erforderlich, den Volumenstrom der vom Eingangskompressor 1 in die Trocknungseinheit 16 gefördert wird exakt zu ermitteln, da für einen gegebenen Volumenstrom vom Eingangskompressor 1 die Trocknung über einen größeren Bereich der Drehzahl der Druckerhöhungseinrichtung 18 gewährleistet ist. Obwohl dieser Volumenstrom von einer Vielzahl von Parametern, wie Ansaugtemperatur und -druck des Eingangskompressors 1, Ansaugvolumen des Eingangskompressors 1, Ansaugtemperatur und - druck der Druckerhöhungseinrichtung 18 abhängt, kann eine Regelung der Drehzahl der Druckerhöhungseinrichtung 18 trotzdem vergleichsweise einfach realisiert werden.

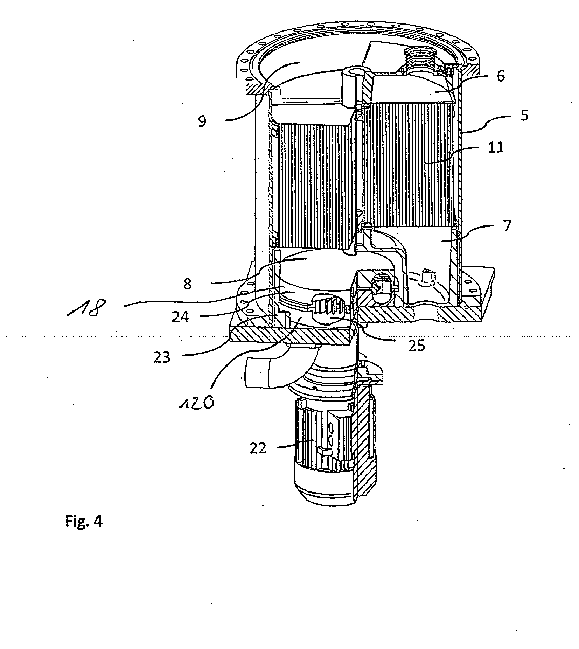

Fig. 4 zeigt einen Ausschnitt einer Adsorptionstrocknungsvorrichtung in einer bevorzugten Ausführungsform in Schrägansicht. Bei dieser Ausführungsform umfasst die Druckerhöhungseinrichtung 18 einen Seitenkanalverdichter 24, der innerhalb des Adsorptionsbehälters 5 bzw. der Trocknungseintrittskammer 8 angeordnet ist. Über einen eine tangentiale Austrittsöffnung 25 kann insbesondere ohne weitere Verrohrung der verdichtete Gasstrom unmittelbar in die Trocknungseintrittskammer 8 gefördert werden. Insbesondere kann der Seitenkanalverdichter 24 in ein Auflager 23 für die Adsorptionskammer 11 integriert sein. Es kann in diesem Zusammenhang ein für Atmosphärendruck ausgelegtes Verdichtergehäuse 120 eingesetzt werden.

Eine Antriebseinheit 22 treibt die Antriebswelle 28 bzw. die Druckerhöhungseinrichtung 18 an.

Alternativ kann ein Radialverdichter zum Einsatz kommen, wobei die Möglichkeit besteht, ein entsprechendes Verdichtergehäuse (beispielsweise ein Spiralgehäuse), das im Normalfall nur für geringe Überdrücke ausgelegt ist, entsprechend druckfest zu gestalten und/oder den einen Austritt des Verdichtergehäuses mit einem Eintritt in die Trocknungseintrittskammer des Adsorptionsbehälters zu verbinden.

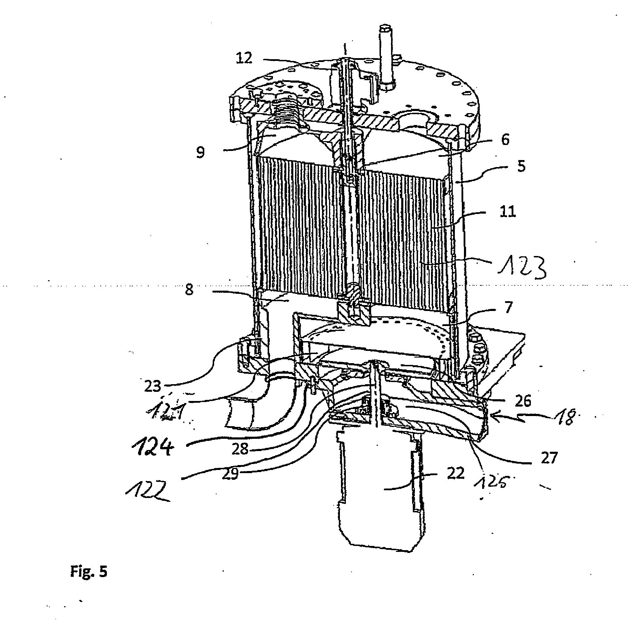

Fig. 5 zeigt einen Ausschnitt einer Adsorptionstrocknungsvorrichtung gemäß einer weiteren bevorzugten Ausführungsform in Schrägansicht (teilweise geschnitten). Bei dieser Ausführungsform ist ein Radialverdichterrad 26 in den Adsorptionsbehälter 5 integriert. Ein Spiralgehäuse ist nicht ausgebildet, sondern stattdessen ist ein Ringdiffusor 121 ausgebildet. Der Ringdiffusor 121 kann zumindest teilweise durch das Auflager 23 bzw. die Trocknungseintrittskammer 7 (wie gemäß Fig. 5) und/oder durch das Vorsehen geeigneter Leiteinrichtungen gebildet werden. Durch den Ringdiffusor 121 werden radial wirkende Kräfte auf eine Antriebswelle 28 minimiert, was sich positiv auf die Lagerung und Durchführung der Antriebswelle 28 auswirkt. Die Antriebswelle 28 ist durch eine Ansaugleitung 122 geführt, in die durch mindestens eine Eintrittsöffnung 27 das zu trocknende Gas seitlich zugeführt wird. Eine Antriebseinheit 22 treibt die Antriebswelle 28 bzw. die Druckerhöhungseinrichtung 18 an. Die Antriebswelle 28 ist über eine Wellendichtung 29 abgedichtet.

Die Antriebseinheit 22 kann zusammen mit der Antriebswelle 28 und einem Gehäuse 125 für die Eintrittsöffnung 27 über einen Flansch 124 an den Adsorptionsbehälter 5 angeflanscht werden. Gemäß einem allgemeineren Gedanken kann die Antriebswelle 28 einschließlich der entsprechenden Wellendichtung 29, gegebenenfalls mit der Antriebseinheit 22 vom Adsorptionsbehälter 5 gelöst bzw. über eine entsprechende Befestigungseinrichtung befestigt werden. Dadurch ist die Wellendichtung 29 auch ohne einen Ausbau der Adsorptionskammer 11 zugänglich und kann ausgetauscht und/oder gereinigt werden. Dadurch wird die Instandhaltung der Adsorptionstrocknungsvorrichtung vereinfacht.

### Bezugszeichenliste

- Q₁: Querschnittsfläche
- Q₂: Querschnittsfläche
- Q₃: Querschnittsfläche
- Q₄: Querschnittsfläche
- 1: Eingangskompressor
- 2: Kompressorblock
- 3: Nachkühler
- 4: Kondensatabscheider
- 5: Adsorptionsbehälter
- 6: Regenerationseintrittskammer
- 7: Regenerationsaustrittskammer
- 8: Trocknungseintrittskammer
- 9: Trocknungsaustrittskammer
- 10: Drosselventil
- 11: Adsorptionskammer
- 12: Kammerantrieb
- 13: Regenerationskühler
- 14: Abscheider
- 15: Ejektor
- 16: Trocknungseinheit
- 18: Druckerhöhungseinrichtung
- 22: Antriebseinheit
- 23: Auflager
- 24: Seitenkanalverdichter
- 25: Austrittsöffnung
- 26: Radialverdichterrad
- 27: Eintrittsöffnung
- 28: Antriebswelle
- 29: Wellendichtung
- 101: Kanal
- 102: Trocknungssektor
- 103: Regenerationssektor
- 104: Rotationsachse
- 105: Leitung
- 106: erste Zuleitung
- 107: zweite Ableitung
- 108: zweite Zuleitung
- 109: erste Ableitung
- 111: erstes Ende der Adsorptionskammer
- 112: zweites Ende der Adsorptionskammer
- 113: Leitung
- 114: Leitung
- 115: Leitung
- 116: Ausgangsleitung
- 117: Pfeil
- 118: Pfeil
- 119: Kühlsektor
- 120: Verdichtergehäuse
- 121: Ringdiffusor
- 122: Ansaugleitung
- 123: Adsorptionsmaterial
- 124: Flansch
- 125: Gehäuse

## Patentansprüche

1. Adsorptionstrocknungsvorrichtung zur Trocknung eines insbesondere verdichteten Gases, umfassend
eine Adsorptionskammer (11) mit einer Vielzahl von Adsorptionskanälen (101),
die ein Adsorptionsmaterial (123) enthalten,
wobei an einem ersten Ende (111) der Adsorptionskammer (11) eine erste Zuleitung (106) sowie eine erste Ableitung (109) angeordnet ist, und an einem zweiten Ende (112) der Adsorptionskammer (11) eine zweite Zuleitung (108) sowie eine zweite Ableitung (107) angeordnet ist, wobei die Adsorptionskammer (11) gegenüber den Zu- und Ableitungen (106, 107, 108, 109) rotierbar ist, so dass die Adsorptionskanäle in zeitlichem Wechsel mit der ersten Zuleitung (106) und der zweiten Ableitung (107) oder der ersten Ableitung (109) und der zweiten Zuleitung (108) fluidtechnisch verbindbar sind, so dass ein Trocknungssektor (102) sowie ein Regenerationssektor (103) definiert ist, wobei im Trocknungssektor (102) das Gas getrocknet wird und im Regenerationssektor (103) das Adsorptionsmaterial (123) regeneriert wird,
wobei die erste Zuleitung (106) derart ausgebildet ist, dass der zu trocknende Gasstrom als Vollstrom dem Regenerationssektor (103), zuführbar ist,
wobei die zweite Ableitung (107) mit der zweiten Zuleitung (108) verbunden ist und somit eine Verbindungsleitung ausbildet, in der ein Kondensator vorgesehen ist,
wobei in der Verbindungsleitung eine Druckerhöhungseinrichtung (18) vorgesehen ist, um den Druck des von der zweiten Ableitung (107) zu der zweiten Zuleitung (108) strömenden Gases zu erhöhen,
wobei ggf. am ersten (111) oder zweiten Ende (112) der Adsorptionskammer (11) ein Kühlstrom abzweigbar ist, um die Adsorptionskammer (11) innerhalb eines Kühlsektors (119) zu kühlen, und
wobei Regenerationssektor (103) und Trocknungsektor (102) zur seriellen Druckströmung hintereinander angeschlossen sind, derart dass der dem Trocknungssektor (102) zugeführte Gasstrom im wesentlichen vollständig dem aus dem Regenerationssektor (103), ggf. einschließlich des Gasstroms aus dem Kühlsektor, abgeführten Gastrom entspricht.

2. Adsorptionstrocknungsvorrichtung nach Anspruch 1,
**dadurch gekennzeichnet, dass**
sich die Adsorptionskammer (11) innerhalb eines Adsorptionsbehälters (5) rotierbar gelagert ist, der vorzugsweise auch die Zu- und Ableitungen (106, 107, 108, 109) zumindest teilweise umfasst.

3. Adsorptionstrocknungsvorrichtung nach Anspruch 2,
**dadurch gekennzeichnet, dass**
die Druckerhöhungsvorrichtung (18) zumindest teilweise innerhalb des Adsorptionsbehälters (5), insbesondere zumindest teilweise innerhalb eines Auflagers (23) für die rotierbare Adsorptionskammer (11) vorgesehen ist.

4. Adsorptionstrocknungsvorrichtung nach einem der vorhergehenden Ansprüche,
**dadurch gekennzeichnet, dass**
die Druckerhöhungseinrichtung (18) ein mechanischer Verdichter, insbesondere ein Kompressor und/oder ein Gebläse und/oder eine Pumpe und/oder ein Seitenkanalverdichter (24) und/oder ein Turboverdichter, beispielsweise Radialverdichter ist.

5. Adsorptionstrocknungsvorrichtung nach einem der vorhergehenden Ansprüche,
**dadurch gekennzeichnet, dass**
ein Eingangskompressor (1) vorgesehen ist, um das zu trocknende Gas der ersten Zuleitung (106) im verdichteten Zustand zuzuführen,
wobei der Eingangskompressor (1) vorzugsweise einen Kompressorkondensator, insbesondere mit einem Nachkühler (3) und einem Kondensatabscheider (4) umfasst, wobei vorzugsweise der Kompressorkondensator, insbesondere der Nachkühler (3) und/oder der Kondensatabscheider (4) den in der Verbindungsleitung vorgesehenen Kondensator zumindest teilweise ausbildet.

6. Adsorptionstrocknungsvorrichtung nach einem der vorhergehenden Ansprüche,
**dadurch gekennzeichnet, dass**
eine Querschnittsfläche Q₁ der ersten Zuleitung, die den Regenerationssektor definiert, kleiner ist als eine an die Adsorptionskammer (11) angrenzende, dritte Querschnittsfläche Q₃ der zweiten Ableitung (107), wobei ein Verhältnis von Q₁/Q₃ vorzugsweise größer als 0,9, also im Bereich 0,9 bis 1,0 ist und/oder eine Querschnittsfläche Q₂ der zweiten Zuleitung, die den Trocknungssektor (102) definiert, kleiner als eine an die Adsorptionskammer (11) angrenzende, vierte Querschnittsfläche Q₄ der ersten Ableitung (109) ist, um die Adsorptionskammer (11) innerhalb des Kühlsektors (119) zu kühlen.

7. Adsorptionstrocknungsvorrichtung nach einem der vorhergehenden Ansprüche, insbesondere nach den Alternativen des Anspruches 4, bei denen vorzugsweise ein Radialverdichter vorgesehen ist,
**dadurch gekennzeichnet, dass**
die Druckerhöhungseinrichtung (18) einen Ringdiffusor (121) umfasst.

8. Adsorptionstrocknungsvorrichtung nach einem der vorhergehenden Ansprüche,
**dadurch gekennzeichnet, dass**
eine Antriebswelle (28) zum Antrieb der Druckerhöhungseinrichtung (18) zumindest in einem Leitungsabschnitt der Verbindungsleitung geführt ist.

9. Adsorptionstrocknungsvorrichtung nach einem der vorhergehenden Ansprüche,
**dadurch gekennzeichnet, dass**
eine Antriebseinheit (22) zum Antrieb der Druckerhöhungseinrichtung (18) außerhalb eines Druckraumes, insbesondere außerhalb eines Verdichtergehäuses (120) und/oder außerhalb des Adsorptionsbehälters (5) angeordnet ist.

10. Adsorptionstrocknungsvorrichtung nach einem der vorhergehenden Ansprüche,
**dadurch gekennzeichnet, dass**
die Welle eines Verdichterrades einseitig, insbesondere außerhalb des Druckraums, vorzugsweise außerhalb eines/des Verdichtergehäuses (120) und/oder außerhalb des Adsorptionsbehälters (5) gelagert ist.

11. Adsorptionstrocknungsvorrichtung nach einem der Ansprüche 1 bis 10,
**dadurch gekennzeichnet, dass**
eine Dichtvorrichtung, vorzugsweise eine Drosselspaltdichtung und/oder eine Labyrinthdichtung und/oder eine insbesondere Trockenlauflippendichtung und/oder mindestens eine Dichtung, die aufweitbar ist, und/oder mindestens eine Dichtung, die im Stillstand der Welle abdichtet und/oder eine gas- oder flüssigkeitsgeschmierte Gleitringdichtung, vorgesehen ist, wobei die Dichtvorrichtung weiter vorzugsweise von außerhalb des Druckraumes, insbesondere von außerhalb des Verdichtergehäuses (120) und/oder des Adsorptionsbehälters (5) zugänglich ist.

12. Adsorptionstrocknungsvorrichtung nach einem der vorhergehenden Ansprüche,
**dadurch gekennzeichnet, dass**
eine Steuereinrichtung zur Steuerung der Drehzahl der Druckerhöhungseinrichtung (18), beispielsweise über eine Frequenzumwandlung vorgesehen ist.

13. Adsorptionstrocknungsvorrichtung nach einem der vorhergehenden Ansprüche, insbesondere nach Anspruch 12,
**dadurch gekennzeichnet, dass**
die Steuereinrichtung zur Steuerung der Drehzahl der Druckerhöhungseinrichtung (18) über ein Signal aus dem Eingangskompressor, beispielsweise über die Drehzahl des Eingangskompressors und/oder über einen Druck im Eingangskompressor oder in der Adsorptionstrocknungsvorrichtung steuerbar ist.

14. Adsorptionstrocknungsanlage umfassend eine Adsorptionstrocknungsvorrichtung nach einem der vorhergehenden Ansprüche,
**gekennzeichnet durch**
einen Eingangskompressor (1), um das zu trocknenden Gas zu verdichten, wobei das zu trocknende, verdichtete Gas vom Eingangskompressor (1) zu der ersten Zuleitung (106) als Vollstrom zuführbar ist,
wobei der Eingangskompressor (1) vorzugsweise einen Kompressorkondensator, insbesondere mit einem Nachkühler (3) und einem Kondensatabscheider (4) umfasst, wobei weiter vorzugsweise der Kompressorkondensator, insbesondere der Nachkühler (3) und/oder der Kondensatabscheider (4) den in der Verbindungsleitung vorgesehenen Kondensator zumindest teilweise ausbildet.

15. Adsorptionstrocknungsverfahren zur Trocknung eines insbesondere verdichteten Gases, insbesondere unter Verwendung der Adsorptionstrocknungsvorrichtung nach einem Ansprüche 1 bis 13 oder der Adsorptionstrocknungsanlage nach Anspruch 14,
**gekennzeichnet durch:**
a) Bereitstellen einer Adsorptionskammer (11) mit einer Vielzahl von Adsorptionskanälen (101);
b) Durchleiten des zu trocknenden Gases im Vollstromprinzip von einem ersten Ende (111) der Adsorptionskammer (11) zu einem zweiten Ende (112) der Adsorptionskammer (11) **durch** einen Regenerationssektor (103);
c) Erhöhen des Druckes des Gases nach dem Durchleiten **durch** den Regenerationssektor;
d) Durchleiten des Gases von dem zweiten Ende (112) zu dem ersten Ende (111) der Adsorptionskammer (11) **durch** einen Trocknungssektor (102); und
e) Rotieren der Adsorptionskammer (11).

16. Adsorptionstrocknungsverfahren nach Anspruch 15,
**dadurch gekennzeichnet, dass**
die im Schritt d) dem Trocknungssektor (102) zugeführte Gasmenge 105 % - 115 %, vorzugsweise 110 % der im Schritt b) aus dem Regenerationssektor (103) abgeführten Gasmenge entspricht.

17. Adsorptionstrocknungsverfahren nach Anspruch 15 oder Anspruch 16,
**dadurch gekennzeichnet, dass**
zwischen b) und d) aus dem Gas insbesondere durch Kühlung auskondensierte Flüssigkeit durch Kondensatabscheidung aus dem Gas abgetrennt wird.

18. Adsorptionstrocknungsverfahren nach einem der Ansprüchen 15 bis 17,
**dadurch gekennzeichnet, dass**
nach d) ein Anteil des Gases, vorzugsweise 5-20 %, weiter vorzugsweise 7-15 %, insbesondere etwa 10 % von dem ersten zu dem zweiten Ende der Adsorptionskammer (11) durch eine Kühlsektor (119) geleitet wird.

19. Adsorptionstrocknungsverfahren nach einem der Ansprüche 15 bis 18,
**dadurch gekennzeichnet, dass**
eine Antriebseinheit (22) zur Erhöhung des Druckes unter c) mit variabler Drehzahl betrieben wird, wobei die Drehzahl durch Auswertung mindestens eines der folgenden Parameter bestimmt wird:
- Gasliefermenge eines Eingangskompressors
- Drehzahl des Eingangskompressors (1);
- Eintrittsdruck in eine Druckerhöhungseinrichtung (18);
- Eintrittstemperatur in die Druckerhöhungseinrichtung (18);
- Ansaugdruck bzw. Umgebungsdruck des Eingangskompressors (1);
- Ansaugtemperatur des Eingangskompressors (1);
- Differenzdruck zwischen einem ersten Ende des Trocknungssektors und einem zweiten Ende des Regenerationssektors (103).

20. Adsorptionstrocknungsverfahren nach einem der Ansprüche 15 bis 19,
**dadurch gekennzeichnet, dass**
die Rotation unter c) erst dann gestartet wird, wenn ein vorbestimmter Temperaturgrenzwert des Gases und/oder eines Bestandteils einer verwendeten Adsorptionstrocknungsvorrichtung überschritten wird.

## Claims

1. An adsorption drying device for drying an e.g. compressed gas, comprising an adsorption chamber (11) having a plurality of adsorption conduits (101) containing an adsorption material (123),
wherein at a first end (111) of the adsorption chamber (11) a first feeding line (106) and a first discharging line (109) are disposed, and at a second end (112) of the adsorption chamber (11) a second feeding line (108) and a second discharging line (107) are disposed, wherein the adsorption chamber (11) is rotatable with respect to the feeding and discharging lines (106, 107, 108, 109) so that the adsorption conduits may be fluidically connected in temporal alternation with the first feeding line (106) and the second discharging line (107) or the first discharging line (109) and the second feeding line (108), so that a drying sector (102) as well as a regeneration sector (103) are defined, wherein the gas is dried in the drying sector (102), and the adsorption material (123) is regenerated in the regeneration sector (103),
wherein the first feeding line (106) is configured such that the gas stream to be dried may be fed to the regeneration sector (103) as a full flow, wherein the second discharging line (107) is in communication with the second feeding line (108) and thus forms a connecting line in which a condenser is provided,
wherein a pressure increasing device (18) is provided within the connecting line so as to increase the pressure of the gas flowing from the second discharging line (107) to the second feeding line (108),
wherein a cooling stream may be branched off at the first (111) or second end (112) of the adsorption chamber (11), as need be, so as to cool the adsorption chamber (11) within the cooling sector (119), and
wherein the regeneration sector (103) and the drying sector (102) are connected in cascade for a serial through-flow such that the gas stream fed to the drying sector (102) essentially completely corresponds to the gas stream discharged from the regeneration sector (103), where appropriate, including the gas stream discharged from the cooling sector.

2. The adsorption drying device according to claim 1,
**characterized in that**
the adsorption chamber (11) is supported to be rotatable within an adsorption container (5) which preferably comprises also the feeding and discharging lines (106, 107, 108, 109) at least in part.

3. The adsorption drying device according to claim 2,
**characterized in that**
the pressure-increasing means (18) is provided at least in part within the adsorption container (5), e.g. at least in part within a support (23) for the rotatable adsorption chamber (11).

4. The adsorption drying device according to any one of the preceding claims,
**characterized in that**
the pressure-increasing means (18) is a mechanical condenser, e.g. a compressor and/or a fan and/or a pump and/or a side-channel compressor (24) and/or a turbo compressor, for instance a radial compressor.

5. The adsorption drying device according to any one of the preceding claims,
**characterized in that**
an input compressor (1) is provided for conducting the gas to be dried in a compressed state to the first feeding line (106),
wherein the input compressor (1) preferably comprises a compressor condenser, e.g. having a secondary cooler (3) and a condensate separator (4), wherein preferably the compressor condenser, e.g. the secondary cooler (3) and/or the condensate separator (4) form(s) at least in part the condenser provided in the connecting line.

6. The adsorption drying device according to any one of the preceding claims,
**characterized in that**
a cross-sectional area Q₁ of the first feeding line which defines the regeneration sector is smaller than a third cross-sectional area Q₃ of the second feeding line (107) adjacent to the adsorption chamber (11), with a ratio of Q₁/Q₃ being preferably more than 0.9, hence in a range of 0.9 to 1.0, and/or a cross-sectional area Q₂ of the second feeding line which defines the drying sector (102) is smaller than a fourth cross-sectional area Q₄ of the first discharging line (109) adjacent to the adsorption chamber (11) in order to cool the adsorption chamber (11) within the cooling sector (119).

7. The adsorption drying device according to any one of the preceding claims, e.g. according to the alternatives of claim 4 in which a radial compressor is preferably provided,
**characterized in that**
the pressure-increasing means (18) comprises a ring diffuser (121).

8. The adsorption drying device according to any one of the preceding claims,
**characterized in that**
a drive shaft (28) for driving the pressure-increasing means (18) is guided at least in a line section of the connecting line.

9. The adsorption drying device according to any one of the preceding claims,
**characterized in that**
a drive unit (22) for driving the pressure-increasing means (18) is arranged outside the pressure space, e.g. outside a compressor casing (120) and/or outside the adsorption container (5).

10. The adsorption drying device according to any one of the preceding claims,
**characterized in that**
the shaft of the compressor wheel is unilaterally supported, e.g. outside the pressure space, preferably outside a/the compressor casing (120) and/or outside the adsorption container (5).

11. The adsorption drying device according to any one of claims 1 to 10,
**characterized in that**
a sealing means is provided, e.g. a throttle slit seal and/or a labyrinth seal and/or an e.g. dry-running lip seal and/or at least a seal which is expandable, and/or at least a seal which seals at a standstill of the shaft and/or a gas-lubricated or liquid-lubricated slip ring seal, with the sealing means more preferably being accessible from outside the pressure space, e.g. from outside the compressor casing (120) and/or adsorption container (5).

12. The adsorption drying device according to any one of the preceding claims,
**characterized in that**
a controller is provided for controlling the speed of the pressure-increasing means (18), for instance via frequency conversion.

13. The adsorption drying device according to any one of the preceding claims, e.g. according to claim 12,
**characterized in that**
the controller for controlling the speed of the pressure-increasing means (18) can be controlled via a signal from the input compressor, for instance via the speed of the input compressor and/or via a pressure within the input compressor and/or the adsorption drying device.

14. An adsorption drying system comprising an adsorption drying device according to any one of the preceding claims,
**characterized by**
an input compressor (1) for compressing the gas to be dried,
wherein the compressed gas to be dried can be conducted from the input compressor (1) to the first feeding line (106) as a full flow,
wherein the input compressor (1) preferably comprises a compressor condenser, e.g. having a secondary cooler (3) and a condensate separator (4), wherein more preferably the compressor condenser, e.g. the secondary cooler (3) and/or the compressor condenser (4) form(s) at least in part the condenser provided in the connecting line.

15. An adsorption drying method for drying an e.g. compressed gas, for instance using the adsorption drying device according to any one of claims 1 to 13 or the adsorption drying system according to claim 14,
**characterized by**
a) providing an adsorption chamber (11) having a plurality of adsorption conduits (101);
b) conducting the gas to be dried in the full flow principle from a first end (111) of the adsorption chamber (11) to a second end (112) of the adsorption chamber (11) through a regeneration sector (103);
c) increasing the pressure of the gas after conducting it through the regeneration sector;
d) conducting the gas from the second end (112) to the first end (111) of the adsorption chamber (11) through a drying sector (102); and
e) rotating the adsorption chamber (11).

16. The adsorption drying method according to claim 15,
**characterized in that**
the amount of gas fed to the drying sector (102) in step d) corresponds to 105% to 115%, preferably 110% of the amount of gas discharged from the regeneration sector (103) in step b).

17. The adsorption drying method according to claim 15 or claim 16,
**characterized in that**
between steps b) and d), the liquid e.g. condensed out from the gas by cooling is separated from the gas by condensate separation.

18. The adsorption drying method according to any one of claims 15 to 17, **characterized in that**
after step d), a portion of the gas, preferably 5 - 20%, more preferably 7 - 15%, e.g. about 10%, is conducted from the first to the second end of the adsorption chamber (11) through a cooling sector (119).

19. The adsorption drying method according to any one of claims 15 to 18,
**characterized in that**
a drive unit (22) for increasing the pressure in step c) is operated at a variable speed, wherein the speed is determined by evaluating at least one of the following parameters:
- gas delivery amount of an input compressor;
- speed of the input compressor (1);
- inlet pressure into the pressure-increasing means (18);
- inlet temperature into the pressure-increasing means (18);
- suction pressure or ambient pressure of the input compressor (1);
- suction temperature of the input compressor (1);
differential pressure between a first end of the drying sector and a second end of the regeneration sector (103).

20. The adsorption drying method according to any one of claims 15 to 19,
**characterized in that**
the rotation in step c) is started only when a predefined temperature threshold of the gas and/or a component of an adsorption drying device used is exceeded.

## Revendications

1. Dispositif de séchage par adsorption pour le séchage d'un gaz en particulier comprimé, comprenant
une chambre d'adsorption (11) présentant une multitude de canaux d'adsorption (101) qui contiennent un matériau d'adsorption (123),
une première conduite d'amenée (106) ainsi qu'une première conduite d'évacuation (109) étant disposées à une première extrémité (111) de la chambre d'adsorption (11), et une deuxième conduite d'amenée (108) ainsi qu'une deuxième conduite d'évacuation (107) étant disposées à une deuxième extrémité (112) de la chambre d'adsorption (11), la chambre d'adsorption (11) pouvant tourner par rapport aux conduites d'amenée et d'évacuation (106, 107, 108, 109) de sorte que les canaux d'adsorption puissent être reliés fluidiquement, de manière alternante dans le temps, à la première conduite d'amenée (106) et à la deuxième conduite d'évacuation (107) ou à la première conduite d'évacuation (109) et à la deuxième conduite d'amenée (108) de sorte qu'un secteur de séchage (102) ainsi qu'un secteur de régénération (103) soient définis, le gaz étant séché dans le secteur de séchage (102) et le matériau d'adsorption (123) étant régénéré dans le secteur de régénération (103),
la première conduite d'amenée (106) étant constituée de telle façon que le flux de gaz à sécher puisse être amené comme flux total au secteur de régénération (103),
la deuxième conduite d'évacuation (107) étant reliée à la deuxième conduite d'amenée (108) et constituant ainsi une conduite de liaison dans laquelle un condenseur est prévu,
un dispositif d'accroissement de pression (18) étant prévu dans la conduite de liaison pour accroître la pression du gaz s'écoulant de la deuxième conduite d'évacuation (107) à la deuxième conduite d'amenée (108),
un flux de refroidissement pouvant être éventuellement dérivé à la première (111) ou à la deuxième extrémité (112) de la chambre d'adsorption pour refroidir la chambre d'adsorption (11) à l'intérieur d'un secteur de refroidissement (119), et
le secteur de régénération (103) et le secteur de séchage (102) étant raccordés l'un derrière l'autre pour l'écoulement sous pression en série de telle façon que le flux de gaz amené au secteur de séchage (102) corresponde de manière sensiblement totale au flux de gaz évacué du secteur de régénération (103), éventuellement y compris le flux de gaz provenant du secteur de refroidissement.

2. Dispositif de séchage par adsorption selon la revendication 1,
**caractérisé en ce que**
la chambre d'adsorption (11) est logée de manière à pouvoir tourner à l'intérieur d'un récipient d'adsorption (5) qui comprend de préférence au moins en partie également les conduites d'amenée et d'évacuation (106, 107, 108, 109).

3. Dispositif de séchage par adsorption selon la revendication 2,
**caractérisé en ce que**
le dispositif d'accroissement de pression (18) est prévu au moins en partie à l'intérieur du récipient d'adsorption (5), en particulier au moins en partie à l'intérieur d'un support (23) pour la chambre d'adsorption (11) pouvant tourner.

4. Dispositif de séchage par adsorption selon l'une des revendications précédentes,
**caractérisé en ce que**
le dispositif d'accroissement de pression (18) est un compresseur mécanique, en particulier un compresseur et/ou une soufflante et/ou une pompe et/ou un compresseur à canal latéral (24) et/ou un turbocompresseur, par exemple un compresseur radial.

5. Dispositif de séchage par adsorption selon l'une des revendications précédentes,
**caractérisé en ce que**
un compresseur d'entrée (1) est prévu pour amener le gaz à sécher à l'état comprimé à la première conduite d'amenée (106),
le compresseur d'entrée (1) comprenant de préférence un condenseur de compresseur, en particulier avec un post-refroidisseur (3) et un séparateur de condensat (4), le condenseur de compresseur, en particulier le post-refroidisseur (3) et/ou le séparateur de condensat (4), constituant de préférence au moins en partie le condenseur prévu dans la conduite de liaison.

6. Dispositif de séchage par adsorption selon l'une des revendications précédentes,
**caractérisé en ce que**
une aire de section Q₁ de la première conduite d'amenée, définissant le secteur de régénération, est plus petite qu'une troisième aire de section Q₃ de la deuxième conduite d'évacuation (107) jouxtant la chambre d'adsorption (11), un rapport de Q₁/Q₃ étant de préférence supérieur à 0,9, soit compris dans la plage de 0,9 à 1,0, et/ou une aire de section Q₂ de la deuxième conduite d'amenée, définissant le secteur de séchage (102), est plus petite qu'une quatrième aire de section Q₄ de la première conduite d'évacuation (109) jouxtant la chambre d'adsorption (11), afin de refroidir la chambre d'adsorption (11) à l'intérieur du secteur de refroidissement (119).

7. Dispositif de séchage par adsorption selon l'une des revendications précédentes, en particulier selon les alternatives de la revendication 4, dans lesquelles de préférence un compresseur radial est prévu,
**caractérisé en ce que**
le dispositif d'accroissement de pression (18) comprend un diffuseur annulaire (121).

8. Dispositif de séchage par adsorption selon l'une des revendications précédentes,
**caractérisé en ce que**
un arbre d'entraînement (28) pour l'entraînement du dispositif d'accroissement de pression (18) est guidé au moins dans une portion de conduite de la conduite de liaison.

9. Dispositif de séchage par adsorption selon l'une des revendications précédentes,
**caractérisé en ce que**
une unité d'entraînement (22) pour l'entraînement du dispositif d'accroissement de pression (18) est disposée à l'extérieur d'une chambre de pression, en particulier à l'extérieur d'un carter de compresseur (120) et/ou à l'extérieur du récipient d'adsorption (5).

10. Dispositif de séchage par adsorption selon l'une des revendications précédentes,
**caractérisé en ce que**
l'arbre d'une roue de compresseur est monté dans un logement d'un côté, en particulier à l'extérieur de la chambre de pression, de préférence à l'extérieur d'un/du carter de compresseur (120) et/ou à l'extérieur du récipient d'adsorption (5).

11. Dispositif de séchage par adsorption selon l'une des revendications 1 à 10,
**caractérisé en ce que**
un dispositif d'étanchéité est prévu, de préférence une garniture d'étanchéité à fente d'étranglement et/ou un joint d'étanchéité à labyrinthe et/ou un joint d'étanchéité à lèvres en particulier fonctionnant à sec et/ou au moins un joint d'étanchéité qui est expansible, et/ou au moins un joint d'étanchéité qui assure l'étanchéité à l'arrêt de l'arbre et/ou une garniture d'étanchéité à bague glissante lubrifiée par gaz ou par liquide, le dispositif d'étanchéité étant en outre accessible de préférence de l'extérieur de la chambre de pression, en particulier de l'extérieur du carter de compresseur (120) et/ou du récipient d'adsorption (5).

12. Dispositif de séchage par adsorption selon l'une des revendications précédentes,
**caractérisé en ce que**
un dispositif de commande est prévu pour la commande de la vitesse de rotation du dispositif d'accroissement de pression (18), par exemple via une conversion de fréquence.

13. Dispositif de séchage par adsorption selon l'une des revendications précédentes, en particulier selon la revendication 12
**caractérisé en ce que**
le dispositif de commande pour la commande de la vitesse de rotation du dispositif d'accroissement de pression (18) peut être commandé via un signal venant du compresseur d'entrée, par exemple via la vitesse de rotation du compresseur d'entrée et/ou via une pression dans le compresseur d'entrée ou dans le dispositif de séchage par adsorption.

14. Installation de séchage par adsorption comprenant un dispositif de séchage par adsorption selon l'une des revendications précédentes,
**caractérisé par**
un compresseur d'entrée (1) pour comprimer le gaz à sécher, le gaz comprimé à sécher pouvant être amené comme flux total du compresseur d'entrée (1) à la première conduite d'amenée (106),
le compresseur d'entrée (1) comprenant de préférence un condenseur de compresseur, en particulier avec un post-refroidisseur (3) et un séparateur de condensat (4), le condenseur de compresseur, en particulier le post-refroidisseur (3) et/ou le séparateur de condensat (4), constituant de manière plus préférentielle au moins en partie le condenseur prévu dans la conduite de liaison.

15. Procédé de séchage par adsorption pour le séchage d'un gaz en particulier comprimé, en particulier moyennant le dispositif de séchage par adsorption selon l'une des revendications 1 à 13 ou l'installation de séchage par adsorption selon la revendication 14,
**caractérisé par** :
a) la mise à disposition d'une chambre d'adsorption (11) présentant une multitude de canaux d'adsorption (101) ;
b) le guidage du gaz à sécher, selon le principe de flux total, d'une première extrémité (111) de la chambre d'adsorption (11) à une deuxième extrémité (112) de la chambre d'adsorption (11) en passant par un secteur de régénération (103) ;
c) l'accroissement de la pression du gaz après le guidage par le secteur de régénération ;
d) le guidage du gaz de la deuxième extrémité (112) à la première extrémité (111) de la chambre d'adsorption (11) en passant par un secteur de séchage (102) ; et
e) la rotation de la chambre d'adsorption (11).

16. Procédé de séchage par adsorption selon la revendication 15,
**caractérisé en ce que**
la quantité de gaz amenée au secteur de séchage (102) à l'étape d) correspond à une quantité comprise entre 105 % et 115 %, de préférence de 110 %, de la quantité de gaz évacuée du secteur de régénération (103) à l'étape b).

17. Procédé de séchage par adsorption selon la revendication 15 ou la revendication 16,
**caractérisé en ce que**
entre b) et d), du liquide extrait du gaz par condensation, en particulier par refroidissement, est séparé du gaz par séparation de condensat.

18. Procédé de séchage par adsorption selon l'une des revendications 15 à 17,
**caractérisé en ce que**
après d), une partie du gaz, de préférence 5 à 20 %, de manière plus préférentielle 7 à 15 %, en particulier environ 10 %, est dirigée de la première à la deuxième extrémité de la chambre d'adsorption (11) par un secteur de refroidissement (119).

19. Procédé de séchage par adsorption selon l'une des revendications 15 à 18,
**caractérisé en ce que**
une unité d'entraînement (22) destinée à accroître la pression en c) est exploitée avec une vitesse de rotation variable, la vitesse de rotation étant déterminée par évaluation d'au moins un des paramètres suivants :
- quantité de livraison de gaz d'un compresseur d'entrée ;
- vitesse de rotation du compresseur d'entrée (1) ;
- pression d'entrée dans un dispositif d'accroissement de pression (18) ;
- température d'entrée dans le dispositif d'accroissement de pression (18) ;
- pression d'aspiration ou pression ambiante du compresseur d'entrée (1) ;
- température d'aspiration du compresseur d'entrée (1) ;
- pression différentielle entre une première extrémité du secteur de séchage et une deuxième extrémité du secteur de régénération (103).

20. Procédé de séchage par adsorption selon l'une des revendications 15 à 19,
**caractérisé en ce que**
la rotation en c) n'est démarrée que lorsqu'une valeur limite de température prédéterminée du gaz et/ou d'un composant d'un dispositif de séchage par adsorption employé est dépassée.
